Europäisches Patentamt

European Patent Office

Office européen des brevets

(19)

(11) Veröffentlichungsnummer: **0 307 497**
**A1**

## (12) EUROPÄISCHE PATENTANMELDUNG

(21) Anmeldenummer: 87113567.9

(22) Anmeldetag: 16.09.87

(51) Int. Cl.4: **A47J 31/46**

Geänderte Patentansprüche gemäss Regel 86 (2) EPÜ.

(43) Veröffentlichungstag der Anmeldung:
22.03.89 Patentblatt 89/12

(84) Benannte Vertragsstaaten:
AT BE CH DE ES FR GB GR IT LI LU NL SE

(71) Anmelder: **Arthur Eugster**
**Elektro-Haushaltgeräte**
**Hofstrasse 28a**
**CH-8590 Romanshorn(CH)**

(72) Erfinder: **Eugster, Arthur**
**Auriswilerstrasse 102**
**CH-8590 Romanshorn(CH)**

(74) Vertreter: **Patentanwälte Grünecker,**
**Kinkeldey, Stockmair & Partner**
**Maximilianstrasse 58**
**D-8000 München 22(DE)**

(54) **Vorrichtung für die Zubereitung von Heissgetränken.**

(57) Geräte, die, wie z.B. Espressomaschinen, mehrere Zubereitungseinrichtungen, wie Kaffeefilter oder Aufschäumdüse, aufweisen, besitzen ein Mehrwegeventil, mit dem das erhitzte Wasser den einzelnen Zubereitungseinrichtungen zugeführt wird. Herkömmliche Ventile sind den durch das heiße und häufig auch aggressive Wasser nicht auf Dauer gewachsen.

Bei der neuen Vorrichtung ist das Mehrwegeventil (5) als Keramikventil mit dicht aufeinanderliegenden, aber gegeneinander bewegbar und mit Verteilerkanälen (14, 15, 16, 17, 23) versehenen Keramikscheiben (11 bis 13) ausgebildet.

Die Vorrichtung eignet sich für die Zubereitung von Heißgetränken, insbesondere Espresso.

FIG.3

EP 0 307 497 A1

## Vorrichtung für die Zubereitung von Heißgetränken

Die Erfindung bezieht sich auf eine Vorrichtung für die Zubereitung von Heißgetränken, insbesondere Espresso, mit einem Wasserbehälter, einem Erhitzer und einem dem Erhitzer nachgeordneten Mehrwegeventil, mittels welchem in dem Erhitzer erzeugtes Heißwasser oder erzeugter Heißdampf einzelnen Zubereitungseinrichtungen, wie Kaffeefilter oder Aufschäumdüse, zugeführt werden kann.

Solche Vorrichtungen sind beispielsweise als Espressomaschinen bekannt. Die dort verwendeten Mehrwegeventile, zumeist 4/3-Wegeventile, dienen dazu, das erhitzte Wasser entweder dem Espressomehl für die Zubereitung von Espresso oder der Aufschäumdüse zum Erhitzen und Aufschäumen der Milch für die anschließende Zubereitungseinrichtungen von Cappuccino zuzuführen. In einer dritten Schaltstellung gibt das 4/3-Wegeventil einen Weg zu einer Abtropfschale od. dgl. frei, so daß sich der Dampf in dem Erhitzer entspannen kann, ohne daß einer der Zubereitungen Heißdampf oder Heißwasser zugeführt wird.

Aufgrund der hohen Temperaturen, mit denen das 4/3-Wegeventil fertigwerden muß, zumeist Temperaturen deutlich über 100° C, ist das Ventil einem hohen Verschleiß ausgesetzt. Bei diesen hohen Temperaturen neigt das verwendete Wasser dazu, Kalk abzulagern, was nach einiger Zeit die Ventilsteuerung beeinträchtigen wird.

Der Erfindung liegt daher die Aufgabe zugrunde, eine Vorrichtung der eingangs genannten Art in der Weise zu verbessern, daß das Mehrwegeventil auch über einen längeren Zeitraum zuverlässig arbeitet.

Diese Aufgabe wird erfindungsgemäß dadurch gelöst, daß das Mehrwegeventil als Keramikventil mit dicht aufeinanderliegenden, aber gegeneinander bewegbaren und mit Verteilerkanälen versehenen Keramikscheiben ausgebildet ist.

Diese Lösung ist einfach aber dennoch überraschend wirkungsvoll. Die Keramikscheiben sind unter den vorherrschenden, extremen Temperaturbedingungen verhältnismäßig widerstandsfähig. Das Keramikmaterial neigt darüber hinaus nicht dazu, Kalk anzulagern, so daß die Verteilerkanäle auch über einen längeren Zeitraum mit unveränderten Querschnitten arbeiten können, was einer langfristig gleichbleibend guten Funktionsweise der Vorrichtung zugutekommt.

In vorteilhafter Ausgestaltung der Erfindung umfaßt das Mehrwegeventil konzentrisch angeordnete Keramikscheiben, wobei eine erste, als Verteilerscheibe ausgebildete Keramikscheibe im Scheibenzentrum eine durchgehende Zuströmbohrung und exzentrisch dazu auf etwa gleichem Radius und voneinander beabstandet durchgehende Verteilerbohrungen aufweist. Diese Scheibe ist baulich besonders einfach, wodurch die Verschleißanfälligkeit noch weiter herabgesetzt wird.

Es ist vorteilhaft, wenn eine zweite, dicht auf der ersten Keramikscheibe aufliegende und gegenüber dieser um das Scheibenzentrum verschwenkbare zweite, als Steuerscheibe ausgebildete Keramikscheibe eine sich vom Scheibenzentrum radial nach außen erstreckende Verteilerausnehmung aufweist, deren Öffnung der Verteilerscheibe zugewandt ist und deren Länge dem radialen Abstand zwischen der Zuströmbohrung und den Verteilerbohrungen der Verteilerscheibe angepaßt ist. Die Funktionsweise des Ventiles ist auf diese Weise denkbar einfach. Das Heißwasser strömt durch die Zuströmbohrung der Verteilerscheibe in die Verteilerausnehmung der Steuerscheibe und wird von dort radial nach außen um 90° umgelenkt und strömt am Ende der Verteilerausnehmung nach einer erneuten Umlenkung um 90° durch eine der Verteilerbohrungen der Verteilerscheibe wieder zurück, d.h. genauer zu einer der einzelnen Zubereitungseinrichtungen.

Bei besonders kleinen Keramikscheiben, die für die hier in Rede stehenden Zubereitungseinrichtungen ausreichend sind, ist es günstig, wenn die erste und die zweite Keramikscheibe an ihrem Außenumfang jeweils in gegeneinander verdrehbaren Käfigen drehfest gehalten ist. Durch Drehen der Käfige, deren Handhabung wesentlich einfacher ist als die der Scheiben, läßt sich so mühelos die Bewegung der Keramikscheiben erreichen.

Aus baulichen Gründen besonders günstig ist es, wenn der Käfig der Verteilerscheibe einstückig mit dem Gehäuse der Vorrichtung ausgebildet ist.

Gemäß einer bevorzugten Ausführungsform kann auf der der Verteilerscheibe abgewandten Seite der Steuerscheibe eine dritte, als Grundscheibe ausgebildete Keramikscheibe angebracht sein, gegenüber welcher die Steuerscheibe verdrehbar ist. Das bedeutet, daß die Steuerscheibe nunmehr zwischen zwei Keramikscheiben, nämlich der Verteilerscheibe und der Grundscheibe verdreht wird, wodurch auf beiden Seiten der Steuerscheibe gleiche Verhältnisse herrschen, die auf lange Zeit eine einwandfreie Funktion fördern.

Eine baulich einfache Halterung der Grundscheibe ergibt sich, wenn die Grundscheibe an ihrem Außenumfang drehfest in einem Ventilflansch gelagert ist, der an dem Gehäuse der Vorrichtung befestigt ist.

Es ist günstig, wenn die Verteilerausnehmung der Steuerscheibe als die Steuerscheibe durchsetzender Schlitz ausgebildet ist. Auf diese Weise werden die jeweiligen Seiten der Grundscheibe und der Verteilerscheibe, die der Steuerscheibe zugewandt sind, mit Wasser benetzt, so daß sich ein Wasserfilm auf den gegeneinander drehbaren Keramikscheiben ausbilden kann, der die Betätigung des Mehrwegeventiles bei sehr geringem Kraftaufwand ermöglicht.

In diesem Zusammenhang ist es besonders günstig, wenn die erste, die zweite und/oder die dritte Keramikscheibe auf den einander zugewandten Oberflächen Fettaschen in Form von flachen kreisringsegmentförmigen Ausnehmungen aufweisen. Diese Fettaschen tragen in zweifacher Weise zu einer leichteren Handhabung und Betätigbarkeit des Mehrwegeventiles bei. Durch die Ausnehmungen wird der Oberflächenanteil der Keramikscheiben, die aufeinanderliegen, also der Tragflächen-Anteil deutlich verringert, was bereits die Haftreibung zwischen den Keramikscheiben herabsetzt. Durch in die Fettaschen eingebrachtes Fett können die sich berührenden Tragflächen der Keramikscheiben mit einem hauchdünnen Fettfilm überzogen werden, der auch bei Heißdampf stets ein ausreichendes Gleiten der Keramikscheiben ermöglicht. Auf diese Weise kann einem Anfressen der Tragflächen der Keramikscheiben entgegengewirkt werden. Hierzu ist es ausreichend, daß die Ausnehmungen so flach sind, daß sie nur eine äußerst geringe Fettmenge aufnehmen können, die bereits für eine Dauerschmierung ausreicht.

Es ist vorteilhaft, wenn der Grund der Ausnehmungen im Vergleich zur Oberfläche der Keramikscheiben rauh ausgebildet ist. Hierdurch wird in den Fettaschen befindliches Fett fest in der Fettasche gehalten, so daß stets nur sehr wenig Fett an die Trag-Oberflächen der Keramikscheiben abgegeben wird.

Zur Erzielung der obengenannten Vorteile ist es bereits ausreichend, wenn an der Verteilerscheibe und an der Grundscheibe jeweils eine Fettasche ausgebildet ist.

Wenn zwischen der Verteilerscheibe und dem Gehäuse der Vorrichtung eine wabenartige, die einzelnen Kanäle gegeneinander abdichtende Kunststoffdichtung angeordnet ist, läßt sich neben der guten Dichtfunktion mit dieser Kunststoffdichtung auch eine Federwirkung erzielen, die dafür sorgt, daß die drei Keramikscheiben stets in gewünschter Weise aneinander anliegen. Vorzugsweise ist die Kunststoffdichtung aus Silikon hergestellt.

Für die Dichtwirkung und vor allem für die Sicherstellung der richtigen Einbaulage der Dichtung ist es günstig, wenn sowohl in der der Dichtung zugewandten Gehäuseseite, wie auch in der Verteilerscheibe eine der Kontur der Dichtung angepaßte Vertiefung ausgebildet ist, in die die Dichtung eingepaßt ist.

Es ist günstig, wenn an dem Käfig der zweiten Keramikscheibe, also der Steuerscheibe ein Wählhandgriff angeordnet ist, mit dem sich die Steuerscheibe in sinnfälliger Weise betätigen läßt.

In diesem Zusammenhang ist es auch vorteilhaft, wenn entsprechend der Stellung der Verteilerbohrungen der Verteilerscheibe an dem Käfig Rasten angebracht sind. Auf diese Art und Weise läßt sich die gewünschte Ventilstellung stets leicht einstellen.

Gemäß einer bevorzugten Ausführungsform ist das Mehrwegeventil als 4/3-Wegeventil mit drei Verteilerbohrungen in der Verteilerscheibe ausgebildet, wobei die erste Verteilerbohrung zu einem Heißwasserkanal für die Espressobereitung, die zweite Verteilerbohrung zu einem Heißdampfkanal für die Aufschäumdüse und eine mittlere Verteilerbohrung zu einem in ein Auffanggefäß mündenden Abdampfkanal führt.

Im folgenden wird ein Ausführungsbeispiel der Erfindung anhand einer Zeichnung näher erläutert. Es zeigen:

Fig. 1 eine Prinzipskizze einer erfindungsgemäßen Vorrichtung, am Beispiel einer Espressomaschine,

Fig. 2 einen Teil des Gehäuses einer erfindungsgemäßen Vorrichtung,

Fig. 3 einen Horizontalschnitt durch das Gehäuse aus Fig. 2 entlang der Linie III-III, wobei unwesentliche Gehäuseteile weggebrochen sind,

Fig. 4 in einer Vorderansicht eine als Verteilerscheibe ausgebildete erste Keramikscheibe,

Fig. 5 die Keramikscheibe aus Fig. 4 in einer Schnittansicht entlang der Linie V-V,

Fig. 6 die Keramikscheibe aus Fig. 4 in einer Rückansicht,

Fig. 7 in einer Vorderansicht eine als Steuerscheibe ausgebildete Keramikscheibe,

Fig. 8 in einer Vorderansicht eine als Grundscheibe ausgebildete Keramikscheibe,

Fig. 9 in einer Vorderansicht eine Kunststoffdichtung, und

Fig. 10 die Kunststoffdichtung aus Fig. 9 in einer Schnittansicht entlang der Linie X-X.

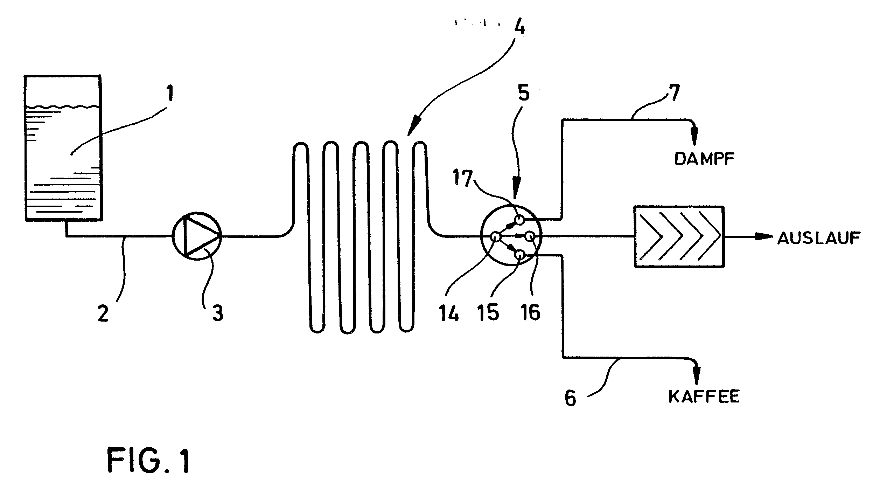

In Fig. 1 ist das Funktionsprinzip einer Espressomaschine dargestellt. Die Espressomaschine umfaßt einen Wassertank 1, der über eine Leitung 2, in der eine Pumpe 3 angeordnet ist, mit einem Erhitzer 4 leitungsverbunden ist. An den Erhitzer 4 schließt sich bei dem hier beschriebenen Ausführungsbeispiel ein 4/3-Wegeventil 5 an, also ein Ventil mit vier Anschlüssen und drei Schaltstellungen. Ein erster Kanal 6 auf der Ausgangsseite des 4/3-Wegeventils 5 führt zur Zubereitungseinrichtung für den Espresso, also zu dem Aufnahmebehälter für das Kaffeemehl. Ein zweiter Kanal 7 führt zu einer Aufschäumdüse, die, was allgemein bekannt ist, zum Aufschäumen und Erhitzen von Milch dient, um Cappuccino zuzubereiten. Ein dritter Kanal 8 ist als Abdampfkanal ausgebildet und dient zur Entspannung des in dem Erhitzer noch befindlichen Dampfes nach Zubereitung des Kaffees. Am Ende des dritten Kanals kann, was der Übersichtlichkeit halber nicht dargestellt ist, eine Auffangschale angeordnet sein.

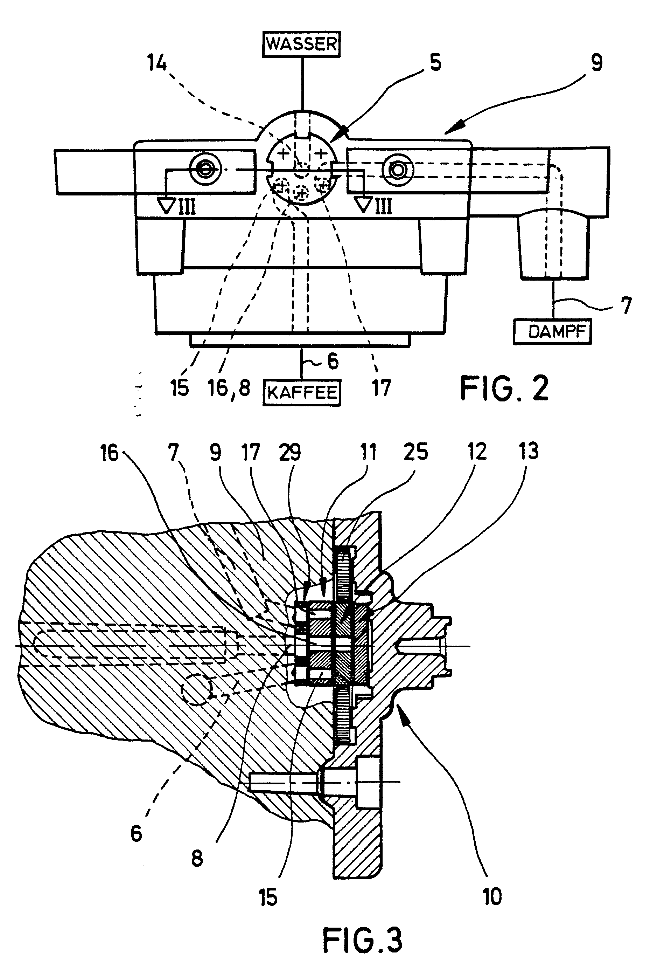

In Fig. 2 ist ein Gehäuse 9 dargestellt, in welchem die einzelnen Kanäle 6 bis 8 ausgebildet sind und in dem auch das 4/3-Wegeventil 9 angeordnet ist.

Wie besser aus Fig. 3 ersichtlich ist, ist das Ventil 5 mit einem Flansch 10 an dem Gehäuse 9 befestigt, welcher Flansch 10 der Übersichtlichkeit halber in Fig. 2 nicht dargestellt ist. Die Fig. 3, die einen Schnitt durch das Gehäuse 9 und den Flansch 10 darstellt, zeigt deutlich, daß das Ventil 5 mehrere dicht aufeinanderliegende und gegeneinander bewegbare Keramikscheiben 11, 12 und 13 umfaßt.

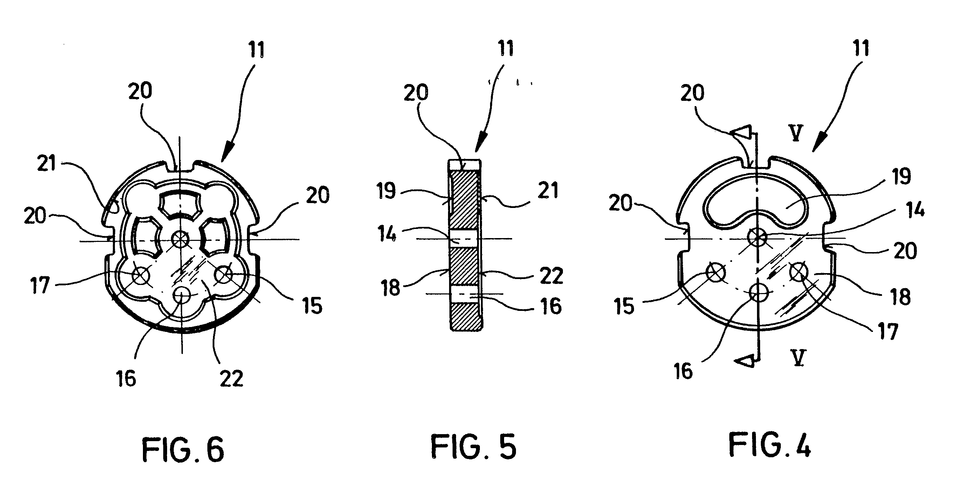

Im folgenden werden zunächst die einzelnen Keramikscheiben für sich näher erläutert. Eine erste Keramikscheibe 11, die in den Fig. 4 bis 6 dargestellt ist, ist als Verteilerscheibe ausgebildet. Im Zentrum der Verteilerscheibe 11 ist eine Zuströmbohrung 14 ausgebildet, die die Scheibe 11 vollständig durchsetzt (vgl. Fig. 5).

Im Abstand zum Scheibenzentrum, also der Zuströmöffnung 14 sind mit gleichem Radius drei Verteilerbohrungen 15 bis 17 ausgebildet, die ebenfalls als Durchgangsbohrungen ausgebildet sind (vgl. Fig. 5).

Die Tragfläche der Verteilerscheibe 11, also deren Vorderseite 18 ist besonders glatt poliert. Die Vorderseite 18 der Verteilerscheibe 11 dichtet gegenüber der zweiten Keramikscheibe 12 bzw. deren Vorderseite ab, ohne daß eine besondere Dichtung vorgesehen ist.

Wie aus Fig. 4 erkennbar ist, ist auf der Vorderseite 18 der Verteilerscheibe 11 eine flache Ausnehmung 19 eingearbeitet, die als Fettasche zur Aufnahme von Schmierfett dient. In Vorderansicht auf die Verteilerscheibe 11 weist die Ausnehmung eine kreisringsegmentartige Form auf. Der Tragflächen-Anteil der Keramikscheibe 11, also der Anteil der Vorderseite 18, der mit der benachbarten Keramikscheibe 12 in Berührung ist, wird durch die Ausnehmung 19 beträchtlich verringert.

An dem Umfang der Keramikscheibe 11 sind Nuten 20 vorgesehen, in die nicht näher dargestellte Vorsprünge des Gehäuses 9 eingreifen. Das Gehäuse 9 dient also als Käfig für die Keramikscheibe 11, in dem diese drehfest gehalten wird.

Betrachtet man die Rückseite 21 der Keramikscheibe 11 so ist erkennbar, daß in die Rückseite 21 eine Vertiefung 22 eingearbeitet ist, die der Kontur einer später noch zu beschreibenden Dichtung angepaßt ist.

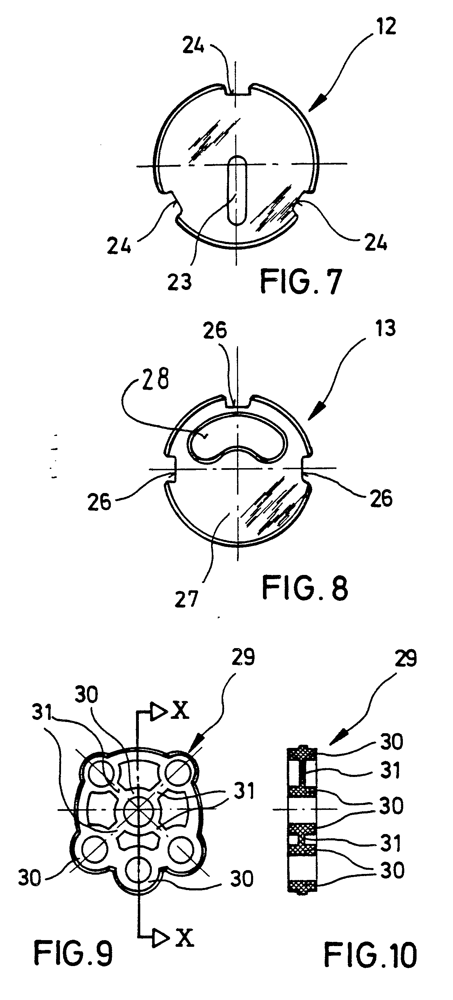

Eine zweite Keramikscheibe 12, in Fig. 3 die mittlere Keramikscheibe, ist als Steuerscheibe ausgebildet und in Fig. 7 dargestellt. Bei der Steuerscheibe 12 handelt es sich ebenfalls um eine im wesentlichen kreisförmige flache Keramikscheibe, die mit einem die Scheibe durchsetzenden Schlitz 23 versehen ist. Der Schlitz 23 reicht vom Zentrum der Keramikscheibe 12 radial soweit nach außen, wie es dem radialen Abstand zwischen den Verteilerbohrungen 15 bis 17 und der Zuströmöffnung 14 der Verteilerscheibe 11 entspricht. Der Schlitz 23 der Steuerscheibe 12 dient also dazu, jeweils eine Verteilerbohrung 15 mit der Zuströmöffnung 14 der Verteilerscheibe 11 in Strömungsverbindung zu bringen. Bei der Steuerscheibe 12 sind sowohl Vorderseite als auch Rückseite glatt poliert, da die Steuerscheibe 12 gegenüber der Verteilerscheibe 11 und gegenüber der im folgenden noch zu erläuternden Keramikscheibe 13 verdrehbar ist. Am Außenumfang der Steuerscheibe 12 sind Nuten 24 vorgesehen, in die ein Betätigungsring 25 mit nicht näher dargestellten Vorsprüngen eingreift (vgl. Fig. 3). Der Betätigungsring 25 ist mit einem Wählhandgriff verbunden, der durch kreisringsegmentförmige Schlitze des Flansches 10 hindurch und in dem Betätigungsring 25 eingreift. Der Wählhandgriff ist der Übersichtlichkeit halber in der Zeichnung nicht dargestellt.

In Fig. 8 ist die in Fig. 3 an dem Flansch 10 anliegende dritte Keramikscheibe 13 dargestellt. Die dritte Keramikscheibe 13 ist als Grundscheibe ausgebildet und weist am Außenumfang Nuten 26 auf, in die nicht näher dargestellte Vorsprünge des Flansches 10 eingreifen, so daß die Grundscheibe 13 drehfest in dem Flansch 12 und somit auch drehfest gegenüber dem Gehäuse 9 gelagert ist.

Wie bei der Verteilerscheibe 11 auch, ist in der Tragfläche, also der der Steuerscheibe 12 zugewandten Vorderseite 27 der Grundscheibe 13 eine Fettasche 28 ausgebildet, die in gleicher Weise wie die Ausnehmung 19 in der Verteilerscheibe 11 ausgebildet ist, weshalb auf eine nähere Beschreibung verzichtet wird.

In den Fig. 9 und 10 ist schließlich eine Kunststoffdichtung dargestellt, die im, in Fig. 3 dargestellten, Einbauzustand zwischen dem Gehäuse 9 und den darin ausgebildeten Kanälen 6 bis 8 sowie der Verteilerscheibe 11 angeordnet ist.

Wie aus Fig. 9 ersichtlich ist, weist die Kunststoffdichtung, die bei dem hier gezeigten Ausführungsbeispiel aus Silicon besteht, im wesentlichen eine Wabenform auf. Diese Wabenform wird im wesentlichen gebildet durch Rohrstücke 30, die den Bohrungen 14 bis 17 der Verteilerscheibe 11 zugeordnet sind und die durch Stege 31 miteinander verbunden sind. Diese Rohrstücke 30 weisen, wie aus Fig. 10 hervorgeht, eine gewisse Länge auf, die in Zusammenwirkung mit dem Siliconmaterial der Kunststoffdichtung 29 dazu führt, daß die Kunststoffdichtung eine gewisse elastische Nachgiebigkeit in Richtung der Keramikscheiben 11 bis 13 aufweist. Durch diese elastische Nachgiebigkeit werden die Keramikscheiben stets mit sanftem Druck aneinandergelegt, wobei auch Fertigungstoleranzen ausgeglichen werden können.

Im folgenden wird die Wirkungsweise der erfindungsgemäßen Vorrichtung näher erläutert.

Wenn das 4/3-Wegeventil zusammengebaut wird, wird zunächst die Silicondichtung 29 in das Gehäuse 9 eingelegt. Darauf wird dann die Verteilerscheibe 11 gelegt, die mit ihren Nuten 20 in Vorsprünge des Gehäuses eingreift, so daß die Zuströmöffnung 14 und die Verteilerbohrungen 15 bis 17 mit den entsprechenden Rohrstücken 30 der Silicondichtung 29 fluchten. In den Befestigungsflansch 10 wird dann zunächst die Grundscheibe 13 eingelegt, die ebenfalls mit ihren Nuten 26 in Vorsprünge des Flansches 10 eingreift. In den Flansch 16 wird dann der Betätigungsring 25 eingelegt, der gegenüber dem Flansch 10 verdrehbar ist und an dem der nicht näher dargestellte Wählhand griff angreifen kann. Konzentrisch in den Betätigungsring 25 wird die Steuerscheibe 12 eingelegt, in deren Nuten 24 Vorsprünge des Betätigungsringes eingreifen, so daß der Betätigungsring drehfest mit der Steuerscheibe 12 verbunden ist. Anschließend kann der Flansch 10 an das Gehäuse 9 angeschraubt werden. Das Ventil 5 befindet sich dann in dem in Fig. 3 gezeigten, zusammengebauten Zustand. Nachzutragen bleibt, daß vor dem Zusammenbau in die Fetttaschen 19 und 28 der Verteilerscheibe 11 und der Grundscheibe 13 lebensmittelechtes Fett eingesetzt wird.

Beim Betrieb der Espressomaschine wird zunächst Wasser in den Wassertank eingefüllt. Dieses Wasser gelangt unter Einwirkung der Pumpe 3 durch die Leitung 2 zu dem Erhitzer 4 und wird dort auf die gewünschte Temperatur erhitzt. Mit Hilfe des 4/3-Wegeventils 5 kann nun gewählt werden, ob Espresso zubereitet werden soll, oder ob Heißdampf für das Aufschäumen von Milch zur Verfügung stehen soll. Jenachdem wird die Steuerscheibe 12 mittels des an dem Betätigungsring 25 angreifenden Wählhandgriff so verschwenkt, daß der Schlitz 23 in der Steuerscheibe 12 die Zuströmöffnung 14 der Verteilerscheibe 11 mit der Verteilerbohrung 15 oder der Verteilerbohrung 17 verbindet. Nach Zubereitung des Espressos, oder wenn der Wassertank 1 leer ist, wird die Steuerscheibe so gedreht, daß die Zuströmöffnung der Verteilerscheibe 11 über den Schlitz 23 der Steuerscheibe 12 mit der Verteilerbohrung 16 verbunden ist, die zu dem Abdampfkanal 8 in dem Gehäuse 9 führt.

Durch Vorsehen der Fetttaschen 19 und 28 in der Verteilerscheibe 11 und der Grundscheibe 13 wird der Tragflächen-Anteil der Keramikscheiben 11 bis 13 deutlich verringert. Die Steuerscheibe 12 läßt sich bereits daher einfacher gegenüber der Verteilerscheibe 11 und der Grundscheibe 13 verdrehen. Noch leichtgängiger wird die Betätigung des Ventiles 5 dadurch, daß in die Fetttaschen 19 und 28 Fett eingebracht wird, das einen hauchdünnen Schmierfilm über die Tragflächen der Keramikscheiben 11 bis 13 zieht. Aufgrund der rauhen Ausnehmung in den Fetttaschen 19 und 28 wird nur eine minimale Fettmenge abgegeben, so daß die gewählte Ausbildung der Fetttaschen eine Dauerschmierung des Ventiles gewährleistet. Die wabenförmige Silicondichtung 29 sorgt in günstiger Weise dafür, daß die Keramikscheiben 11 bis 13 stets mit einem sanften Druck aneinanderliegen, ohne daß hohe Materialspannungen auftreten.

Der nicht dargestellte Wählhandgriff kann Rasten aufweisen, die den einzelnen Verteilerbohrungen 15 bis 17 der Verteilerscheibe 11 zugeordnet sind, so daß das Ventil in den vorgesehenen Ventilstellungen gehalten wird und nur durch Aufbringung eines bestimmten Kraftaufwandes aus dieser Stellung gebracht werden kann.

## Ansprüche

1. Vorrichtung für die Zubereitung von Heißgetränken, insbesondere Espresso, mit einem Wasserbehälter (1), einem Erhitzer (4) und einem dem Erhitzer (4) nachgeordneten Mehrwegeventil (5), mittels welchem in dem Erhitzer (4) erzeugtes Heißwasser oder Heißdampf einzelnen Zubereitungseinrichtungen, wie Kaffeefilter oder Aufschäumdüse, zugeführt werden kann, **dadurch gekennzeichnet, daß** das Mehrwegeventil (5) als Keramikventil mit dicht aufeinanderliegenden, aber gegeneinander verdrehbaren und mit Verteilerkanälen (14, 15, 16, 17, 23) versehenen Keramikscheiben (11, 12, 13) ausgebildet ist.

2. Vorrichtung nach Anspruch 1, **dadurch gekennzeichnet, daß** das Mehrwegeventil (5) konzentrisch angeordnete Keramikscheiben (11, 12, 13) umfaßt, wobei eine erste, als Verteilerscheibe (11) ausgebildete Keramikscheibe im Scheibenzentrum eine durchgehende Zuströmbohrung (14) und exzentrisch dazu auf etwa gleichem Radius und voneinander beabstandet durchgehende Verteilerbohrungen (15, 16, 17) aufweist.

3. Vorrichtung nach Anspruch 1 oder 2, **dadurch gekennzeichnet, daß** eine zweite, dicht auf der ersten Keramikscheibe (11) aufliegende und gegenüber dieser um das Scheibenzentrum verschwenkbare zweite, als Steuerscheibe (12) ausgebildete Keramikscheibe eine sich vom Scheibenzentrum radial nach außen erstreckende Verteilerausnehmung (23) aufweist, deren Öffnung der Verteilerscheibe (11) zugewandt ist und deren Länge dem radialen Abstand zwischen der Zuströmbohrung (14) und den Verteilerbohrungen (15, 16, 17) der Verteilerscheibe (11) angepaßt ist.

4. Vorrichtung nach einem der Ansprüche 1 bis 3, **dadurch gekennzeichnet,** daß die erste und die zweite Keramikscheibe (11, 12) an ihrem Außenumfang jeweils in gegeneinander verdrehbaren Käfigen (9, 25) drehfest gehalten sind.

5. Vorrichtung nach einem der Ansprüche 1 bis 4, **dadurch gekennzeichnet,** daß der Käfig der Verteilerscheibe (II) einstückig mit dem Gehäuse (9) der Vorrichtung ausgebildet ist.

6. Vorrichtung nach einem der Ansprüche 1 bis 5, **dadurch gekennzeichnet,** daß auf der der Verteilerscheibe (11) abgewandten Seite der Steuerscheibe (12) eine dritte, als Grundscheibe (13) ausgebildete Keramikscheibe angebracht ist, gegenüber welcher die Steuerscheibe (12) verdrehbar ist.

7. Vorrichtung nach einem der Ansprüche 1 bis 6, **dadurch gekennzeichnet,** daß die Grundscheibe (13) an ihrem Außen umfang drehfest in einem Ventilflansch (10) gelagert ist, der an dem Gehäuse (9) der Vorrichtung befestigt ist.

8. Vorrichtung nach einem der Ansprüche 1 bis 7, **dadurch gekennzeichnet,** daß die Verteilerausnehmung der Steuerscheibe (12) als die Steuerscheibe (12) durchsetzender Schlitz (23) ausgebildet ist.

9. Vorrichtung nach einem der Ansprüche 1 bis 8, **dadurch gekennzeichnet,** daß die erste, die zweite und/oder die dritte Keramikscheibe (11, 12, 13) auf den einander zugewandten Oberflächen (18, 27) Fettaschen (19, 28) in Form von flachen, kreisringsegmentförmigen Ausnehmungen aufweisen.

10. Vorrichtung nach einem der Ansprüche 1 bis 9, **dadurch gekennzeichnet,** daß der Grund der Ausnehmungen (19, 28) im Vergleich zu den Oberflächen (18, 27) der Keramikscheiben (11, 12, 13) rauh ausgebildet ist.

11. Vorrichtung nach einem der Ansprüche 1 bis 10, **dadurch gekennzeichnet,** daß an der Verteilerscheibe (11) und der an der Grundscheibe (13) jeweils eine Fettasche (19, 28) ausgebildet ist.

12. Vorrichtung nach einem der Ansprüche 1 bis 11, **dadurch gekennzeichnet,** daß zwischen der Verteilerscheibe (11) und dem Gehäuse (9) der Vorrichtung eine wabenartige, die einzelnen Kanäle (14, 15, 16, 17) gegeneinander abdichtende Kunststoffdichtung (29) angeordnet ist.

13. Vorrichtung nach einem der Ansprüche 1 bis 12, **dadurch gekennzeichnet,** daß sowohl in der der Dichtung (29) zugewandten Gehäuseseite wie auch in der Verteilerscheibe (11) eine der Kontur der Dichtung (29) angepaßte Vertiefung (22) ausgebildet ist, in die die Dichtung (29) ein gepaßt ist.

14. Vorrichtung nach einem der Ansprüche 1 bis 13, **dadurch gekennzeichnet,** daß an dem Käfig (25) der Steuerscheibe ein Wählhandgriff angeordnet ist.

15. Vorrichtung nach einem der Ansprüche 1 bis 14, **dadurch gekennzeichnet,** daß entsprechend der Stellung der Verteilerbohrungen (15, 16, 17) der Verteilerscheibe (11) an dem Käfig und/oder dem Wählhandgriff Rasten angebracht sind.

16. Vorrichtung nach einem der Ansprüche 1 bis 15, **dadurch gekennzeichnet,** daß das Mehrwegeventil (5) als 4/3-Wegeventile mit drei Verteilerbohrungen (15, 16, 17) in der Verteilerscheibe (11) ausgebildet ist, wobei die erste Verteilerbohrung (15) zu einem Heißwasserkanal (6) für die Espressobereitung, die zweite Verteilerbohrung (17) zu einem Heißdampfkanal (7) für die Aufschäumdüse und eine mittlere Verteilerbohrung (16) zu einem in ein Auffanggefäß führenden Abdampfkanal (8) führt.

Geänderte Patentansprüche gemäss Regel 86(2) EPÜ.

1. Vorrichtung für die Zubereitung von Heißgetränken, insbesondere Espresso, mit einem Wasserbehälter (1), einem Erhitzer (4) und einem dem Erhitzer (4) nachgeordneten Mehrwegeventil (5), mittels welchem in dem Erhitzer (4) erzeugtes Heißwasser oder Heißdampf einzelnen Zubereitungseinrichtungen, wie Kaffeefilter oder Aufschäumdüse, zugeführt werden kann, wobei das Mehrwegeventil (5) als Keramikventil mit dicht aufeinanderliegenden, aber gegeneinander verdrehbaren und mit Verteilerkanälen (14, 15, 16, 17, 23) versehenen Keramikscheiben (11, 12, 13) ausgebildet ist,

**dadurch gekennzeichnet,**
daß zumindest ein Teil der Keramikscheiben (11, 12, 13) auf den einander zugewandten Oberflächen (18, 27) Fettaschen (19, 28) in Form von flachen, kreisringsegmentförmigen Ausnehmungen aufweisen.

2. Vorrichtung nach Anspruch 1, dadurch gekennzeichnet, daß der Grund der Ausnehmungen (19, 28) im Vergleich zu den Oberflächen (18, 27) der Keramikscheiben (11, 12, 13) rauh ausgebildet ist.

3. Vorrichtung nach Anspruch 1 oder 2, dadurch gekennzeichnet, daß das Mehrwegeventil, übereinander angeordnet, eine erste Verteilerscheibe (11), eine zweite Steuerscheibe (12) und eine dritte Grundscheibe (13) aufweist, und daß an der Verteilscheibe (11) und der an der Grundscheibe (13) jeweils eine Fettasche (19, 28) ausgebildet ist.

4. Vorrichtung nach einem der Ansprüche 1 bis 3, dadurch gekennzeichnet, daß zwischen der Verteilerscheibe (11) und dem Gehäuse (9) der Vorrichtung eine wabenartige, die einzelnen Kanäle (14, 15, 16, 17) gegeneinander abdichtende Kunststoffdichtung (29) angeordnet ist.

5. Vorrichtung nach einem der Ansprüche 1 bis 4, dadurch gekennzeichnet, daß sowohl in der der Dichtung (29) zugewandten Gehäuseseite wie auch in der Verteilerscheibe (11) eine der Kontur der Dichtung (29) angepaßte Vertiefung (22) ausgebildet ist, in die die Dichtung (29) eingepaßt ist.

FIG. 1

EP 0 307 497 A1

EP 3763

FIG. 2

FIG.3

FIG. 4

FIG. 5

FIG. 6

FIG. 7

FIG. 8

FIG.9

FIG.10

Europäisches
Patentamt

**EUROPÄISCHER RECHERCHENBERICHT**

Nummer der Anmeldung

EP 87 11 3567

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 232 460 (FELDMÜHLE AG) * Insgesamt * | 1-8,14, 16 | A 47 J 31/46 |
| Y | DE-B-1 282 377 (AMERICAN RADIATOR & STANDARD SANITARY CORP.) * Insgesamt * | 1 | |
| A | | 14,16 | |
| Y | EP-A-0 217 211 (ESSEGIELLE) * Figuren 1,5-8 * | 1 | |
| A | | 14,16 | |
| A | DE-C- 641 709 (GOTTLIEB NIESS) | | |
| A | US-A-1 750 068 (TORRIANI) | | |

**RECHERCHIERTE SACHGEBIETE (Int. Cl.4)**

A 47 J

Der vorliegende Recherchenbericht wurde für alle Patentansprüche erstellt

| Recherchenort | Abschlußdatum der Recherche | Prüfer |
|---|---|---|
| DEN HAAG | 28-04-1988 | GAIC P.M.Z. |